# FASCICULE DE BREVET EUROPEEN

(11) **EP 2 581 305 B1**
(45) Date de publication et mention de la délivrance du brevet: **19.03.2014**
(21) Numéro de dépôt: 12187046.3
(22) Date de dépôt: 02.10.2012
(51) Int. Cl.: B64C 25/40, F16C 19/52, F16C 21/00, F16C 39/02

(54) **Dispositif de connexion d'un motoréducteur à une roue d'aéronef, pour permettre son entraînement sélectif par le motoréducteur.**
Vorrichtung zur Verbindung eines Getriebemotors mit einem Rad eines Luftfahrzeugs zum selektiven Antrieb dieses Rads durch den Getriebemotor.
Device for connecting a gear motor to an aircraft wheel to allow its selective drive by the gear motor.

(30) Priorité: 14.10.2011 FR 1159308
(43) Date de publication de la demande: 17.04.2013
(73) Titulaire: Messier-Bugatti-Dowty, 78140 Velizy Villacoublay (FR)
(72) Inventeur: Bucheton, Daniel, 78150 LE CHESNAY (FR)
(74) Mandataire: Parzy, Benjamin Alain

(56) Documents cités:
- EP-A1- 0 499 310
- US-A- 2 500 577
- US-A1- 2006 110 086
- US-A1- 2011 156 472

## Description

L'invention est relative à un dispositif de connexion d'un motoréducteur à une roue d'aéronef, pour permettre son entraînement sélectif par le motoréducteur.

### ARRIERE-PLAN TECHNOLOGIQUE DE L'INVENTION

On connaît du document FR2954752 ou US2500577 un ensemble de roue et frein avec un motoréducteur disposé pour entraîner la roue en rotation. Le frein comporte un porte-actionneurs de freinage qui porte également le motoréducteur. Une couronne dentée en engrènement permanent avec le motoréducteur est portée par le porte-actionneurs de freinage. Un organe d'embrayage permet de connecter sélectivement la couronne dentée et la roue pour permettre l'entraînement de la roue par le motoréducteur. En l'occurrence, cet organe est un embrayage électromagnétique qui s'étend également autour du porte-actionneurs.

Bien que présentant de nombreux avantages, ce type de dispositif peut parfois être difficile à loger dans l'environnement encombré d'une roue d'aéronef.

Il existe donc un besoin pour un dispositif de connexion d'un motoréducteur à une roue d'aéronef plus facilement logeable.

En particulier, on a pensé à rendre la couronne dentée solidaire en rotation de la roue, et d'interposer entre le motoréducteur et la couronne dentée un dispositif de connexion à pignon fou. Le pignon est monté fou sur l'arbre du dispositif, lui-même relié au motoréducteur pour son entraînement en rotation. Des moyens de crabotage permettent la solidarisation sélective du pignon fou à son arbre, pour permettre une liaison entre la couronne dentée et le motoréducteur. Cependant, le pignon fou est généralement monté sur son arbre avec un palier à éléments roulants, comme des rouleaux ou des aiguilles. En cas de blocage du palier du pignon fou, le motoréducteur se retrouve connecté à la roue de l'aéronef, risquant ainsi un entraînement du motoréducteur par la roue, ce qui, compte tenu des rapports de réduction utilisés, peut conduire à une rotation à vitesse dangereusement rapide du moteur.

### OBJET DE L'INVENTION

L'invention a pour objet un dispositif de connexion à pignon fou d'un motoréducteur à une roue d'aéronef pouvant laisser la roue tourner librement, même si le palier du pignon fou se bloque.

### BREVE DESCRIPTION DE L'INVENTION

En vue de la réalisation de ce but, on propose un dispositif de connexion d'un motoréducteur à une roue d'aéronef, comportant :
- un carter portant à rotation un arbre destiné à être entraîné par le motoréducteur, et sur lequel un pignon est monté fou au moyen d'un palier à éléments roulants;
- une couronne dentée destinée à être solidarisée en rotation à la roue d'aéronef et disposée pour être en engrènement permanent avec le pignon fou ;
- des moyens de solidarisation en rotation sélective du pignon fou à l'arbre ;

Selon l'invention, un palier lisse est interposé entre l'arbre et le palier à éléments roulants du pignon fou. Ainsi, même si le palier à éléments roulants venait à se bloquer, le pignon pourrait quand même tourner en étant entraîné par la roue de l'aéronef, sans toutefois que la rotation du pignon fou soit transmise à l'arbre et donc au motoréducteur. Bien sûr, quand le pignon est solidarisé en rotation à l'arbre, les deux paliers, y compris donc le palier lisse, sont neutralisés et n'empêchent donc pas la transmission de couple entre l'arbre et le pignon.

### BREVE DESCRIPTION DES FIGURES

L'invention sera mieux comprise à la lecture de la description qui suit d'un mode particulier de réalisation en référence aux figures des dessins annexés parmi lesquelles :
- la figure 1 est une vue en coupe longitudinale d'un dispositif selon l'invention, le pignon étant désaccouplé de l'arbre ;
- la figure 2 est une vue analogue à celle de la figure 1, le pignon étant accouplé à l'arbre.

### DESCRIPTION DETAILLEE D'UN MODE DE REALISATION DE L'INVENTION

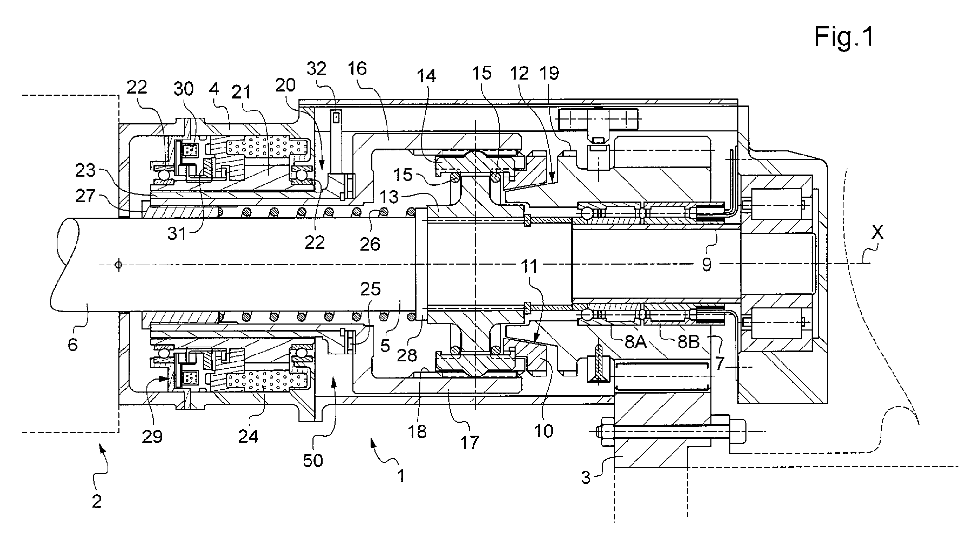

En référence à la figure 1, le dispositif de connexion 1 de l'invention est destiné à connecter en rotation un motoréducteur 2 (symbolisé en pointillés sur les figures) à une roue d'aéronef par l'intermédiaire d'une couronne dentée 3 solidaire de la roue (également illustrée en pointillés).

Le dispositif comporte un carter 4 dans lequel un arbre 5 est monté à rotation autour d'un axe de rotation X. L'arbre 5 comporte une extrémité 6 qui saille du carter 4 pour son entraînement en rotation par le motoréducteur 1. L'arbre 5 porte un pignon 7 qui est monté fou sur l'arbre au moyen d'un palier à rouleaux 8, ici composé de deux roulements à rouleaux 8A et 8B accolés.

En temps normal, le pignon 7 est libre en rotation, ce qui permet de désolidariser en rotation le motoréducteur 2 de la couronne dentée 3, et donc de la roue de l'aéronef. C'est par exemple le cas lors du décollage ou encore lors de l'atterrissage. Lors de ces phases, la vitesse de rotation de la roue de l'aéronef peut être importante, et si le motoréducteur était connecté avec la roue, il en résulterait une vitesse de rotation très importante du moteur du motoréducteur qui risquerait de l'endommager.

Lors du déplacement à basse vitesse de l'aéronef au sol, au contraire, le motoréducteur doit être connecté en rotation à la roue pour pouvoir entraîner celle-ci en rotation, et ainsi permettre le déplacement de l'aéronef sans le concours des réacteurs de celui-ci. A cet effet, le dispositif est pourvu de moyens de solidarisation en rotation 50 du pignon fou 7 à son arbre 5, qui seront détaillés plus loin.

Lorsque le pignon fou 7 est libre en rotation, il est important d'éviter le blocage du palier à rouleaux 8 Cet évènement, rare, mais pas impossible, peut se produire si l'un des rouleaux se brise, ou si une impureté vient s'interposer entre les rouleaux. En conséquence, un couple résistant se développe dans le palier à roulements 8 qui solidarise de fait en rotation le pignon fou 7 à l'arbre 5 qui se met donc à tourner, entraîné par la rotation de la roue.

Pour éviter cette situation, et selon l'invention, on interpose entre le palier à rouleaux 8 et l'arbre 5 un palier lisse 9 monté serré sur l'arbre 5 mais tournant relativement au palier à rouleaux 8, formant ainsi un second palier en série avec le palier à rouleaux 8.

En temps normal, le pignon fou 7 tourne autour de l'arbre grâce aux rouleaux du palier à rouleaux 8, sans entraîner l'arbre 5. Cependant, si les rouleaux venaient à se bloquer, le palier à rouleaux 8 tournerait en bloc avec le pignon fou 7, l'ensemble tournant alors autour de l'arbre grâce au palier lisse 9. Le couple de frottement développé par le palier lisse 9 est légèrement plus important que celui normalement développé par le palier à rouleaux 8, mais pas suffisant toutefois pour entraîner l'arbre 5. Ainsi, même en cas de blocage du palier à rouleaux 8, l'arbre 5 ne peut être entraîné, sauf si bien sûr les moyens de solidarisation ont été activés.

Pour vérifier si le palier à rouleaux 8 est bloqué, le roulement à rouleaux 8B est ici équipé d'un capteur 51 mesurant la vitesse de rotation relative des deux bagues du roulement à rouleaux 8B. Pour discriminer le cas où l'aéronef serait à l'arrêt (il est bien sûr normal dans ce cas qu'aucune vitesse relative ne soit détectée entre les bagues du roulement à rouleaux 8B), le dispositif est équipé d'un capteur 52 mesurant la vitesse de rotation du pignon fou 7. On remarquera que la vitesse de rotation mesurée par le capteur 52 est la même que celle de la bague externe du roulement à rouleaux 8B. En comparant les signaux des capteurs 51 et 52, il est aisé d'en déduire la vitesse de rotation de la bague interne du roulement à rouleaux 8B, qui est censée être la même que la vitesse de rotation de l'arbre 5 (qui est connue par ailleurs en mesurant par exemple une vitesse de rotation de l'un des éléments tournant du motoréducteur 2). Si ces vitesses ne coïncident pas, c'est que le palier lisse 9 s'est mis à glisser, et qu'il y a donc une résistance qui empêche les deux bagues du roulement à rouleaux 8B de tourner librement l'une par rapport à l'autre. On peut ainsi diagnostiquer facilement une défaillance du palier à rouleaux 8.

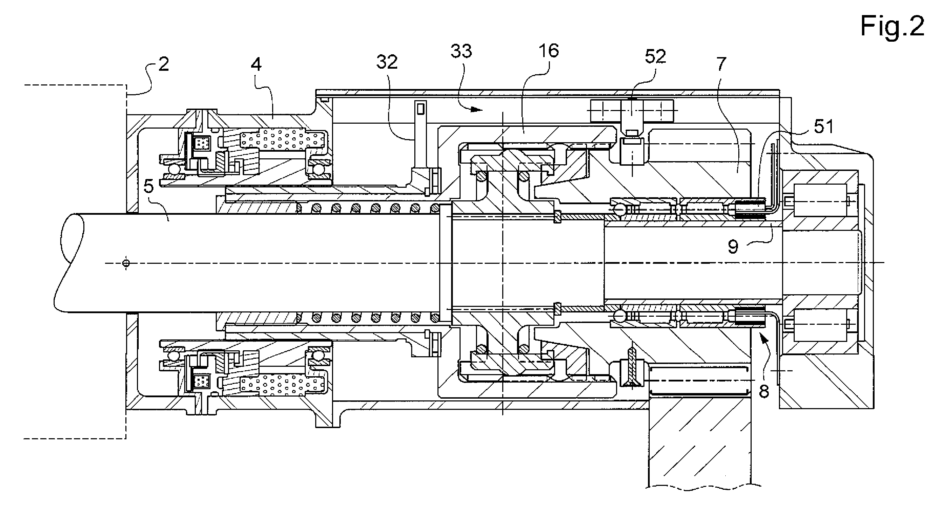

Les moyens de solidarisation en rotation 50 sont maintenant détaillés. Ils comportent un baladeur 16 qui est mené en rotation par l'arbre 5, mais axialement mobile entre une position décrabotéee illustrée à la figure 1, dans lequel des cannelures internes 17 portées par une partie en cloche 18 du baladeur 16 sont dégagées de cannelures homologues 19 du pignon fou 7, et une position crabotée illustrée à la figure 2 dans laquelle les cannelures du baladeur 16 et du pignon fou 7 coopèrent pour assurer la solidarisation en rotation du pignon fou 7 à l'arbre 5.

Le baladeur 16 est déplacé axialement au moyen d'un ensemble vis/écrou 20 s'étendant autour de l'arbre 5. L'ensemble vis/écrou 20 comporte ici un écrou 21 monté à rotation dans le carter 4 au moyen de deux paliers à roulements 22, et une vis 23 creuse qui coopère avec l'écrou par une liaison hélicoïdale. L'écrou 21 forme le rotor d'un moteur 24 dont on distingue ici le stator bobiné s'étendant autour de l'écrou 21.

Une rotation de l'écrou 21 provoque un déplacement axial de la vis 23, celle-ci étant empêchée de tourner par un organe d'anti-rotation non représenté ici pour plus de clarté. L'extrémité de la vis 23 est appuyée contre le baladeur 16 par l'intermédiaire d'une butée à rouleaux 25. Un ressort de rappel 26 s'étend entre une butée 27 associée au baladeur 16 et un épaulement 28 de l'arbre 5 pour rappeler le baladeur 16 vers la position décrabotée, ce qui a pour effet de plaquer le baladeur 16 contre la butée à rouleaux 25, et ainsi de solidariser axialement le baladeur 16 et la vis 23.

Ainsi, une rotation du moteur électrique 24 provoque une rotation de l'écrou 21, donc une translation de la vis 23, et, partant, un déplacement axial du baladeur 16.

Ici, la liaison entre l'écrou 21 et la vis 23 est réversible. Un frein électromagnétique 29 comportant un électroaimant 30 solidaire du carter 4 et une armature solidaire en rotation de l'écrou 21 permet de bloquer sélectivement l'écrou 21 en rotation, ce qui provoque un blocage axial du baladeur 16 en position de crabotage. Pour des raisons de sécurité, le frein électromagnétique 29 bloque l'écrou 21 uniquement si le frein 29 est alimenté électriquement. Lorsque le frein 29 n'est pas alimenté, le baladeur 16 revient de lui-même sous l'action du ressort 26 en position décrabotée.

Un témoin 32 est monté solidaire de la vis 23 de sorte qu'une extrémité du témoin se déplace dans une rainure longitudinale 33 du carter 4 dans laquelle des capteurs peuvent être montés pour détecter les positions crabotée et décrabotée du baladeur 16, voire, si nécessaire, pour détecter toute position intermédiaire entre ces deux positions.

Selon un aspect particulier de l'invention, les moyens de solidarisation sont ici équipés d'un dispositif de synchronisation comportant, de façon connue en soi,
- un anneau de synchronisation 10 avec une surface conique interne 11 apte à venir coopérer par friction avec une surface conique externe 12 du pignon 7 ;
- un moyeu 13 qui est solidaire en rotation de l'arbre 5 au moyen d'une liaison à cannelures, et qui comporte une partie externe cannelée coopérant avec les cannelures du baladeur 16 pour entraîner celui-ci en rotation. Au moins certains des creux externes du moyeu 13 sont occupés par des clavettes 14 repoussées vers l'extérieur par des anneaux élastiques 15.

Le fonctionnement du dispositif de synchronisation est bien connu par ailleurs et ne sera pas décrit en détail ici. Il suffit de rappeler que lorsque le baladeur 16 est poussé vers le pignon fou 7, la surface conique de l'anneau de synchronisation 10 frotte contre la surface conique externe homologue du pignon fou 7. Ce frottement entraîne une mise en rotation de l'arbre 6 jusqu'à ce que sa vitesse de rotation coïncide avec celle du pignon fou 7 entraîné via la couronne dentée 3 par la roue de l'aéronef qui tourne. L'anneau de synchronisation 10 et le pignon fou 7 comportent des moyens d'indexation pour arrêter angulairement ces deux éléments dans une position axiale telle que les cannelures 18 du baladeur 16 s'étendent en regard des creux homologues des cannelures 19 du pignon fou 7. Le baladeur 16 peut alors être avancé jusqu'à ce que le baladeur 16 soit craboté au pignon fou 7. Ce dernier se retrouve alors lié positivement en rotation avec l'arbre 5.

L'invention n'est pas limitée à ce qui vient d'être décrit, mais englobe toute variante entrant dans le cadre défini par les revendications. En particulier, bien qu'ici, le palier à éléments roulants comprenne des roulements à rouleaux, tout autre type de palier à éléments roulants pourra être utilisé, comme par exemple une douille à aiguilles.

## Revendications

1. Dispositif de connexion d'un motoréducteur (2) à une roue d'aéronef, comportant :
- un carter (4) portant à rotation un arbre (5) destiné à être entraîné par le motoréducteur, et sur lequel un pignon (7) est monté fou au moyen d'un palier à éléments roulants (8);
- une couronne dentée (3) destinée à être solidarisée en rotation à la roue d'aéronef et disposée pour être en engrènement permanent avec le pignon fou ;
- des moyens de solidarisation en rotation (50) sélective du pignon fou à l'arbre ;
**caractérisé en ce qu'**un palier lisse (9) est interposé entre l'arbre et le palier à éléments roulants du pignon fou.

2. Dispositif selon la revendication 1, dans lequel le palier à éléments roulants comprend au moins un roulement à rouleaux.

3. Dispositif selon la revendication 1, équipé d'un capteur (51) de vitesse de rotation relative entre des bagues du palier à éléments roulants.

4. Dispositif selon la revendication 1, équipé d'un capteur (52) de vitesse de rotation du pignon fou (7).

5. Procédé de détection de défaillance du palier à éléments roulants du dispositif de la figure 1, comportant les étapes de :
- mesurer une vitesse de rotation relative entre une bague interne et une bague externe du palier à éléments roulants ;
- mesurer une vitesse de rotation du pignon fou ;
- en déduire une vitesse de rotation de la bague interne du palier à éléments roulants ;
- comparer cette dernière vitesse à une vitesse de rotation de l'arbre.

## Patentansprüche

1. Vorrichtung zur Verbindung eines Getriebemotors (2) mit einem Rad eines Luftfahrzeugs, umfassend:
- ein Gehäuse (4), das drehbar eine Welle (5) trägt, die dazu bestimmt ist, von dem Getriebemotor angetrieben zu werden, und auf der ein Zahnrad (7) (Losrad) mittels eines Wälzlagers (8) frei drehbar gelagert ist,
- ein Zahnkranz (3), der dazu bestimmt ist, drehfest am Rad des Luftfahrzeugs befestigt zu werden und so angeordnet ist, dass er im Dauereingriff mit dem Losrad steht;
- Mittel (50) zur selektiven drehfesten Kopplung des Losrades mit der Welle;
**dadurch gekennzeichnet, dass** ein Gleitlager (9) zwischen der Welle und dem Wälzlager des Losrades angeordnet ist.

2. Vorrichtung nach Anspruch 1, bei der das Wälzlager mindestens ein Rollenlager umfasst.

3. Vorrichtung nach Anspruch 1, die mit einem Sensor (51) zum Erfassen der relativen Drehzahl zwischen den Ringen des Wälzlagers ausgerüstet ist.

4. Vorrichtung nach Anspruch 1, die mit einem Sensor (52) zum Erfassen der Drehzahl des Losrades (7) ausgerüstet ist.

5. Verfahren zum Erfassen eines Defekts des Wälzlagers der Vorrichtung der Figur 1, umfassend die Schritte:
- Messen einer relativen Drehzahl zwischen einem Innenring und einem Außenring des Wälzlagers;
- Messen einer Drehzahl des Losrades;
- daraus Ableiten einer Drehzahl des Innenrings des Wälzlagers;
- Vergleichen dieser letztgenannten Geschwindigkeit mit einer Drehzahl der Welle.

## Claims

1. A device for connecting a gearmotor (2) to an aircraft wheel, the device comprising:
· a casing (4) rotatably carrying a shaft (5) that is to be driven by the gearmotor, and on which a pinion (7) is mounted idle by means of a rolling bearing (8);
· a toothed ring (3) for being constrained in rotation with the aircraft wheel and arranged to mesh permanently with the idle pinion; and
· rotation securing means (50) for selectively constraining the idle pinion in rotation with the shaft;
the device being **characterized in that** a smooth bearing (9) is interposed between the shaft and the rolling bearing of the idle pinion.

2. A device according to claim 1, wherein the rolling bearing comprises at least one roller bearing.

3. A device according to claim 1, fitted with a sensor (51) for sensing relative speed of rotation between the rings of the rolling bearing.

4. A device according to claim 1, fitted with a sensor (52) for sensing speed of rotation of the idle pinion (7).

5. A method of detecting a failure of the rolling bearing in the device of claim 1, the method comprising the steps of:
· measuring a relative speed of rotation between an inner ring and an outer ring of the rolling bearing;
· measuring a speed of rotation of the idle pinion;
· deducing therefrom a speed of rotation of the inner ring of the rolling bearing; and
· comparing said deduced speed with a speed of rotation of the shaft.
